# EUROPEAN PATENT SPECIFICATION

(11) **EP 1 647 068 B1**
(45) Date of publication and mention of the grant of the patent: **25.12.2013**
(21) Application number: 04737975.5
(22) Date of filing: 15.07.2004
(51) Int. Cl.: H01M 8/24, H01M 8/02, H01M 8/12

(54) **ELECTRICALLY CONDUCTIVE FUEL CELL CONTACT MATERIAL**
ELEKTRISCHER LEITFÄHIGER BRENNSTOFFZELLENKONTAKTWERKSTOFF
MATERIAU ELECTRO-CONDUCTEUR POUR CONTACT DE PILE A COMBUSTIBLE

(30) Priority: 18.07.2003 US 604413
(43) Date of publication of application: 19.04.2006
(73) Proprietor: Versa Power Systems, Ltd., Calgary, Alberta T2B 3R2 (CA)
(72) Inventor: ZHANG, Xinge, Calgary, Alberta T2B 3R2 (CA); WOOD, Anthony, Calgary, Alberta T2Z 2L7 (CA); RIOU, Michel, Calgary, Alberta T2B 3R2 (CA)
(74) Representative: Wilson Gunn
(86) International application number: PCT/CA2004/001044
(87) International publication number: WO 2005/008816

(56) References cited:
- WO-A-01/04981
- WO-A-01/28024
- WO-A-02/41434
- WO-A-02/44103
- DE-A1- 19 932 194
- DE-C1- 19 609 133
- DE-C1- 19 627 504
- PATENT ABSTRACTS OF JAPAN vol. 2003, no. 04, 2 April 2003 (2003-04-02) & JP 2002 358980 A (MITSUBISHI MATERIALS CORP), 13 December 2002 (2002-12-13)

## Description

### FIELD OF THE INVENTION

The present invention relates to a contact material in a solid oxide fuel cell comprising electrically conductive perovskites. Furthermore, the present invention relates to a multilayer design of contact materials which may include such perovskites.

### BACKGROUND OF THE INVENTION

High temperature fuel cells like solid oxide fuel cells comprise an electrolyte sandwiched between a cathode and an anode. Oxygen combines with electrons at the cathode to form oxygen ions, which are conducted through the ion-conducting ceramic electrolyte to the anode. At the anode, oxygen ions combine with hydrogen and carbon monoxide to form water and carbon dioxide thereby liberating electrons.

The fuel cells are stacked and interleaved with interconnect plates which distribute gases to the electrode surfaces and which act as current collectors. Contact pastes are used to bond the electrode to an interconnect and must therefore be electrically conductive. In co-owned U.S. Patent No. 6,420,064, a cathode contact layer comprised of lanthanum cobaltate is disclosed. German patent DE 196 27 504 C1 discloses a fuel cell stack having a chromium-based alloy electrode coated with a contact layer comprising a lower oxidic layer, a middle ceramic layer and an upper ceramic layer, the middle ceramic layer having less porosity than the upper ceramic layer. Preferably, the lower oxidic layer is a La_{0.9}Sr_{0.1}CrO₃ or La_{0.8}Sr_{0.2}MnO₃ layer and the middle and upper ceramic layer are La₁₋ₓSrₓMnO₃ (x = 0.1 to 0.2) or LaCoO₃ layers.

Lanthanum cobaltate ("LC") (also known as lanthanum cobaltite) is a perovskite material, which is a well-known class of mineral oxides characterized by a cubic or orthorhombic crystalline structure. Perovskites may be described by the formula ABO₃, where A represents divalent and/or trivalent ions and B represent trivalent and/or tetravalent ions, respectively, while the O atom is the oxygen ion. The divalent, trivalent and tetravalent ions may include La³⁺, Sm³⁺, Sr²⁺, Ca²⁺, Co³⁺, Ni³⁺, Fe³⁺, Cr³⁺, Mn³⁺ or Mn⁴⁺ amongst other known ions. In cubic perovskites, this ABO₃ structure in a general sense can be thought of as face centered cubic (FCC) lattice with A atoms at the comers and the O atoms on the faces. The B atom completes the picture and is located at the center of the lattice.

Some perovskites such as LC are reasonably good electrical conductors. However, as a contact paste in a Ni-YSZ anode-supported SOFCs, LC suffers from one significant disadvantage. If sintered, its coefficient of thermal expansion is significantly greater than that of the bulk cell. Consequently, thermal cycling of the fuel cell results in large thermal stresses and the contact paste may break away from the cell and interconnect resulting in poor electrical contact.

In some cases, contact paste materials which display better interface performance with the cell can have poor interface performance with the interconnect.

Therefore, there is a need in the art for fuel cells having an improved contact paste with a multilayer design which is electrically conductive and which mitigates the difficulties in the prior art.

### SUMMARY OF THE INVENTION

The invention comprises fuel cell stack comprising a plurality of planar interleaved fuel cells and interconnects and comprising a contact layer disposed between at least one electrode of a fuel cell and an adjacent interconnect, the contact layer comprising at least two outer layers and a central layer of electrically conductive materials comprising electrically conductive ceramic particles, characterised by the central layer comprising a stress relief layer, wherein the particles in the stress relief layer are coarse particles, and the particles in the outer layers are fine particles.

Further optional features of the invention are set out in the claims dependent on claim 1.

### BRIEF DESCRIPTION OF THE DRAWINGS

The invention will now be described by way of an exemplary embodiment with reference to the accompanying simplified, diagrammatic, not-to-scale drawing where:
Figure 1 is a perspective view of an embodiment of a fuel cell unit of the present invention.
Figure 2 is a cross-sectional view of an assembled fuel cell unit.
Figure 3 is a SEM photograph of a multilayer contact material showing a fractured stress relief layer.

### DETAILED DESCRIPTION OF THE INVENTION

The present invention provides for a perovskite contact material which may be used to interface between a solid oxide fuel cell electrode and an interconnect or a current collector. When describing the present invention, all terms not defined herein have their common art-recognized meanings. The following description is of a single embodiment and certain variations. It is not intended to be limiting of the invention as defined in the claims.

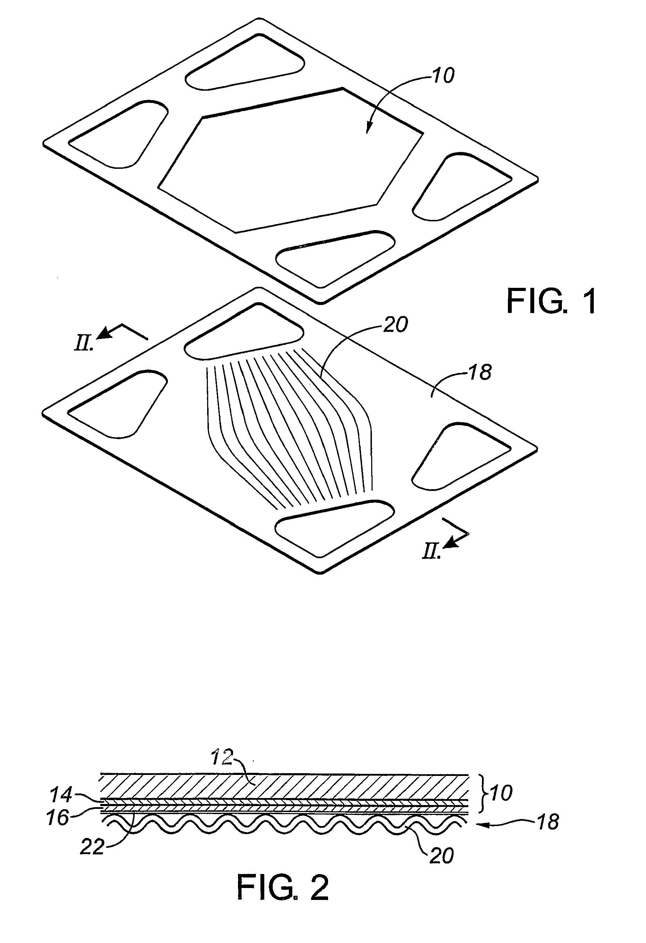

A portion of a fuel cell stack is illustrated as an exploded view in Figure 1 and in cross-section in Figure 2. A single fuel cell (10) consists of an anode (12) supported structure having a thin electrolyte (14) and cathode (16) layer. A single fuel cell unit also includes an interconnect (18) which may be a monolithic plate having flow-directing ribs (20) stamped as shown in Figure 1. The ribs (20) assist in providing an even distribution of air flow across the entire surface of the cathode between the air intake and exhaust manifolds. The cathode may be composite material comprising a noble metal such as palladium and a ceramic such as yttrium stabilized zirconium, as described in co-owned U.S. Patent No. 6,420,064.

The contact material (22) of the present invention is applied to one or both of the cathode and interconnect faces upon assembly of the fuel cell stack. The contact material may be applied by screen printing, as is well known in the art. In one embodiment, a layer may be screen printed onto the cathode surface and allowed to dry. The contact material paste dries as a porous green ceramic layer and may then be sintered prior to assembly of fuel cell units in the stack. Alternatively, the material may not be sintered before stack assembly, in which case, the contact material is sintered during operation of the fuel cell. A second contact layer is then applied (the fracture layer) and dried. Finally, a thin layer of the contact material as a wet paste is screen printed onto the cell dried layer(s) or the interconnect surface and the interconnect is then contacted with the cathode surface. If the interconnect is corrugated or ribbed, the contact material may or may not fill in the void areas of the interconnect. The contact material must be porous to allow reactants to flow from the interconnect and reach the fuel cell electrode.

Perovskites of the present invention may be described by the general formula ABO₃, where A is a doped or undoped rare earth metal, lanthanide or mixed lanthanide, and B is a doped or undoped transition metal, where the perovskite has a coefficient of thermal expansion which closely matches that of the fuel cell electrode or the interconnect. A coefficient of thermal expansion (CTE) is considered to closely match another CTE if it is within about 5 x 10⁻⁶K⁻¹ of the other CTE. The coefficient of thermal expansion of a material may be determined empirically or by estimation using known and published values. Whether or not two materials have closely matched coefficients of expansion may also be determined experimentally by thermal cycling the two materials adhered to each other and observing the loss of adhesion. For example, a contact material of the present invention may be applied to an interconnect or to a fuel cell electrode, and the two materials thermally cycled within the operating temperature range of a solid oxide fuel cell. If no, or substantially none, loss of adhesion is observed, then a person skilled in the art may conclude that the CTE's of the two materials are likely to be closely matched.

The transition metal may comprise cobalt, nickel, iron, copper, zinc or lead. In one embodiment, B comprises cobalt doped with nickel as follows: Co_{1-y}Ni_{y} where 0.3≤ y≤ 0.7. Preferably, y is about 0.4. Nickel is a preferred material because the inclusion of nickel in the B-site tends to lower the coefficient of thermal expansion. Further, the perovskite formed with nickel is highly electrically conductive but is not very reactive with other materials.

The A element is preferably lanthanum and may be doped with an alkaline earth metal such as strontium, barium or calcium to improve electrical conductivity. Therefore, A may comprise La₁₋ₓEₓ wherein E is an alkaline earth metal and 0.0≤ x≤ 0.8. Lanthanum cobalt nickel oxide materials are referred to herein as "LCN".

A particularly preferred material is La₁₋ₓEₓ Co₀.₆Ni₀.₄ where x is greater than or equal to zero and less than about 0.7. Preferably, x is less than 0.5. The A and B elements may be stoichiometric or non-stoichiometric. If non-stoichiometric, the A:B ratio may vary from about 0.9 to about 1.1.

The perovskites of the present invention may be applied as a paste using well-known solvents and binders to either or both of the cathode and interconnect in a fuel cell unit and sintered prior to assembly of the fuel cell stack. Alternatively, the paste may be unsintered prior to assembly of the fuel cell stack and sintered *in situ* upon operation of the fuel cell stack. Stack operating temperatures may reach about 800° C. Sintering additives to lower the sintering temperature of the perovskite may be desirable or necessary. Suitable sintering additives or aids such as copper, silver or tin are well-known in the art.

A contact material of the present invention may also be used in the interface between the anode surface and an interconnect and its use is not restricted to the cathode surface.

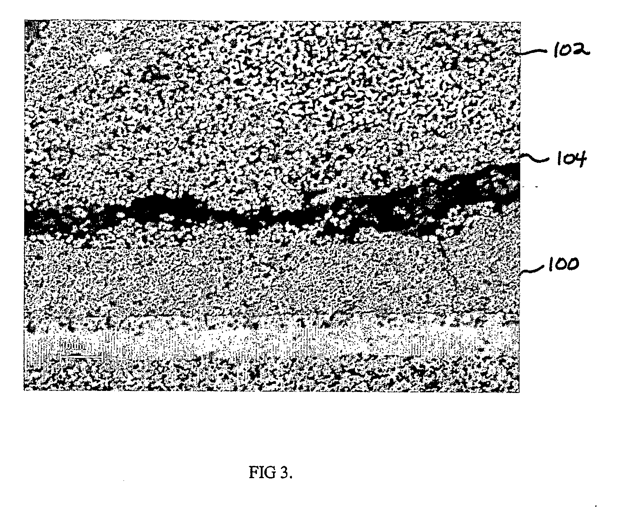

According to the invention, as shown in Figure 3, the contact paste material is applied in a multilayer configuration which may provide better resistance to thermal cycling degradation and long term degradation. The contact paste is applied in three layers in which the outer contact layers (100, 102) adhere to the fuel cell electrode and interconnect respectively, and the central layer comprises a stress relief layer (104). The outer contact layers comprise fine conductive particles while the stress relief layer comprises coarse conductive particles. The conductive particles in either or both the fine and coarse layers preferably comprise conductive perovskites, including those perovskites described herein, or perovskites having a K₂NiF₄-type structure (e.g. La₂Ni₁₋ₓCoₓO₄) or any other electrically conducting ceramic powder compatible with the fuel cell electrolyte and electrode materials.

As used herein, the term "fine" particles comprise particles having diameters less than about 2 µm and preferably about 0.3 to about 1.1 µm. As used herein, "coarse" particles comprises particles which are at least twice as large than fine particles. Preferably, coarse particles have diameters greater than about 1 µm and more preferably greater than about 2 µm.

The stress relief layer (104) may be formed of a conductive ceramic material, such as the perovskites described herein, which has similar chemistry and similar sintering characteristics to the fine outer layers but comprises coarse particles. Alternatively, the stress relief layer may be formed from a conductive ceramic material which has significantly different sintering characteristics than the fine layers. For example, the stress relief layer may be formed of lanthanum strontium manganite (LSM), which has a significantly higher sintering temperature than LC or LCN. In this case, the stress relief particles size may be fine or coarse. In this case, the stress relief layer would not sinter or sinter to the same extent as the other layers. Alternatively, the stress relief layer may be formed of a porous metallic material such as expanded metal, or a fme metal mesh.

The stress relief layer may be porous or highly porous. In one embodiment, the stress relief layer comprises coarse particles and has a porosity of between about 25% to about 70%. Preferably, the stress relief layer may be about 50% porous. Porous metallic stress relief layers may be more porous, up to about 95%.

The fine particle layers (100, 102) may be thinner or thicker than the coarse central layer. Preferably, the fine particle layers are less than about 25 µm thick while the coarse central layer may be about 10 µm to about 50 µm thick. The combined thickness of the multilayer contact materials may be about 60 to 120 µm, depending on the stack design and seal thicknesses. The combined thickness should preferably not exceed 200 µm.

The layers may be applied by screen printing a paste and sintered prior to stack assembly or left unsintered as described above. Sintering aids may be included if necessary or desired. The necessity or desirability of a sintering aid may be determined empirically by one skilled in the art.

In one specific embodiment, a layer of fine lanthanum cobalt nickel oxide (LCN), as described above, is applied to the fuel cell electrode surface by screen printing. The LCN particles have an average particle size of about 1.0 µm with about 50% of the particles falling in the range of about 0.5 µm to about 1.1 µm. This layer of fine LCN particles is less than about 25 µm thick and may or may not be sintered. Subsequently, a layer of coarse LCN material, as described above, is applied by screen printing onto the first fine layer and allowed to dry. The coarse LCN particles have an average particle size of between about 2 to about 3 µm, with a majority of the particles falling in the range between about 1 µm to about 10 µm. The remaining fine layer of LCN is screen printed onto this layer on the cell or the interconnect just prior to assembly of the stack. In an alternative embodiment, LC may be used in place of LCN in any or all of the layers.

The multilayered approach may provide better long term stability by providing a sacrificial fracture layer which may absorb expansion mismatches during thermal cycling and long term operation. The interfaces between the fine layers and the fuel cell and interconnect respectively remain intact while physical stresses are absorbed by the central stress relief layer. As shown in Figure 3, a scanning electron micrograph demonstrates such a fracture in an autopsied fuel cell. The inventors have found that electrical conductivity through the contact material is maintained while the layers are compressed in a stack despite such horizontal fractures in the stress relief layer.

As will be apparent to those skilled in the art, various modifications, adaptations and variations of the foregoing specific disclosure can be made without departing from the scope of the invention claimed herein. The various features and elements of the described invention may be combined in a manner different from the combinations described or claimed herein, without departing from the scope of the invention.

## Claims

1. A fuel cell stack comprising a plurality of planar interleaved fuel cells and interconnects and comprising a contact layer (22) disposed between at least one electrode (12 or 16) of a fuel cell (10) and an adjacent interconnect (18), the contact layer (22) comprising at least two outer layers (100, 102) and a central layer (104) of electrically conductive materials comprising electrically conductive ceramic particles, **characterised by** the central layer comprising a stress relief layer (104), wherein the particles in the stress relief layer (104) are coarse particles, and the particles in the outer layers (100, 102) are fine particles.

2. The fuel cell stack of claim 1 wherein the coarse particles have an average diameter at least twice as large as the average diameter of the fine particles.

3. The fuel cell stack of claim 2 wherein the outer layers (100, 102) comprise particles having an average diameter of less than about 2 µm and the stress relief layer comprises particles having a diameter of greater than 2 µm.

4. The fuel cell stack of claim 2 wherein the stress relief layer (104) comprises lanthanum cobalt nickel oxide particles.

5. The fuel cell stack of claim 5 wherein the outer layers (100, 102) comprise lanthanum cobaltite particles.

6. The fuel cell stack of claim 1 wherein the outer layers (100, 102) comprise lanthanum cobaltite or fine lanthanum cobalt nickel oxide particles and the stress relief layer (104) comprises lanthanum strontium manganite particles, or lanthanum cobalt nickel oxide particles.

7. The fuel cell stack of claim 6 wherein a first outer layer (100) contacting the electrode (12 or 16) comprises fine lanthanum cobalt nickel oxide particles, a second outer layer (102) contacting the interconnect (18) comprises fine lanthanum cobaltite particles, and the stress relief layer (104) comprises coarse lanthanum cobalt nickel oxide particles.

8. The fuel cell stack of claim 1 wherein any layer of the contact layer (22) comprises a perovskite having the formula ABO₃ where:
(a) A is a doped or undoped rare earth metal or lanthanide;
(b) B is a doped or undoped transition metal; and
(c) wherein the perovskite is electrically conductive and has a coefficient of thermal expansion which is within 5x10⁻⁶ K⁻¹ of the coefficient of thermal expansion of the at least one electrode of the fuel cell or the adjacent interconnect.

9. The fuel cell stack of claim 8 wherein A comprises doped or undoped lanthanum.

10. The fuel cell stack of claim 9 wherein B comprises cobalt combined with nickel as follows: Co_{1-y}Ni_{y} where 0.3≤ y≤ 0.7.

11. The fuel cell stack of claim 10 wherein the perovskite material comprises La₁₋ₓEₓ Co_{0.6}Ni_{0.4}O₃, where E is an alkaline earth metal and x is greater than or equal to zero.

12. The fuel cell stack of claim 8, 9, 10, or 11 wherein at least one dopant is a sintering aid.

13. The fuel cell stack of claim 8 wherein the electrode (12 or 16) comprises a noble metal and yttria stabilized zirconia.

14. The fuel cell stack of claim 13 wherein the noble metal comprises palladium.

## Patentansprüche

1. Brennstoffzellenstapel, enthaltend eine Vielzahl von ebenen, verschachtelten Brennstoffzellen und Interkonnektoren sowie eine Kontaktschicht (22), welche zwischen mindestens einer Elektrode (12 oder 16) einer Brennstoffzelle (10) und einem angrenzenden Interkonnektor (18) angeordnet ist, wobei die Kontaktschicht (22) mindestens zwei äußere Schichten (100, 102) und eine zentrale Schicht (104) aus elektrisch leitfähigen Materialien enthält, wobei die elektrisch leitfähigen Materialien elektrisch leitfähige, keramische Partikel enthalten, **dadurch gekennzeichnet, dass** die zentrale Schicht eine Dämpfungsschicht (104) enthält, wobei die Partikel in der Dämpfungsschicht (104) grobkörnige Partikel sind, und die Partikel in den äußeren Schichten (100, 102) feinkörnige Partikel sind.

2. Brennstoffzellenstapel nach Anspruch 1, wobei die grobkörnigen Partikel einen mittleren Durchmesser aufweisen, welcher mindestens zweimal so groß ist wie der mittlere Durchmesser der feinkörnigen Partikel.

3. Brennstoffzellenstapel nach Anspruch 2, wobei die äußeren Schichten (100, 102) Partikel mit einen mittleren Durchmesser von weniger als etwa 2 µm enthalten und die Dämpfungsschicht Partikel mit einem mittleren Durchmesser von mehr als 2 µm enthält.

4. Brennstoffzellenstapel nach Anspruch 2, wobei die Dämpfungsschicht (104) Lanthan-Cobalt-Nickel-Oxid Partikel enthält.

5. Brennstoffzellenstapel nach Anspruch 5, wobei die äußeren Schichten (100, 102) Lanthan-Cobaltit Partikel enthalten.

6. Brennstoffzellenstapel nach Anspruch 1, wobei die äußeren Schichten (100, 102) Lanthan-Cobaltit oder feinkörnige Lanthan-Cobalt-Nickel-Oxid Partikel enthalten und die Dämpfungsschicht (104) Lanthan-Strontium-Manganit Partikel oder Lanthan-Cobalt-Nickel-Oxid Partikel enthält.

7. Brennstoffzellenstapel nach Anspruch 6, wobei eine erste äußere Schicht (100) in Verbindung stehend mit der Elektrode (12 oder 16) feinkörnige Lanthan-Cobalt-Nickel-Oxid Partikel enthält, wobei eine zweite äußere Schicht (102) in Verbindung stehend mit dem Interkonnektor (18) feinkörnige Lanthan-Cobaltit Partikel enthält, und wobei die Dämpfungsschicht (104) grobkörnige Lanthan-Cobalt-Nickel-Oxid Partikel enthält.

8. Brennstoffzellenstapel nach Anspruch 1, wobei jede Schicht der Kontaktschicht (22) einen Perowskiten mit der Zusammensetzung ABO₃ enthält, wobei:
(a) A ein dotiertes oder undotiertes Metall der Seltenen Erden oder ein Lanthanoid ist;
(b) B ein dotiertes oder nicht-dotiertes Übergangsmetall ist; und
(c) wobei der Perowskit elektrisch leitfähig ist und einen thermischen Ausdehnungskoeffizienten hat, welcher um weniger als 5 × 10⁻⁶ K⁻¹ abweicht von dem thermischen Ausdehnungskoeffizienten der wenigstens einen Elektrode der Brennstoffzelle oder dem angrenzenden Interkonnektor.

9. Brennstoffzellenstapel nach Anspruch 8, wobei A dotiertes oder undotiertes Lanthan enthält.

10. Brennstoffzellenstapel nach Anspruch 9, wobei B Cobalt zusammen mit Nickel mit folgender Zusammensetzung enthält: Co_{1-y}Ni_{y}, wobei 0,3 ≤ y≤ 0,7.

11. Brennstoffzellenstapel nach Anspruch 10, wobei das Perowskit-Material La₁₋ₓEₓCo_{0,6}Ni_{0,4}O₃ enthält, wobei E ein Erdalkalimetall ist und x größer oder gleich Null ist.

12. Brennstoffzellenstapel nach Anspruch 8, 9, 10 oder 11, wobei wenigstens ein Dotierungsstoff ein Sinterhilfsmittel ist.

13. Brennstoffzellenstapel nach Anspruch 8, wobei die Elektrode (12 oder 16) ein Edelmetall und ein mit Yttriumoxid stabilisiertes Zirkoniumdioxid enthält.

14. Brennstoffzellenstapel nach Anspruch 13, wobei das Edelmetall Palladium enthält.

## Revendications

1. Empilement de piles à combustible comprenant une pluralité de piles à combustible intercalées planes et des interconnexions et comprenant une couche de contact (22) disposée entre au moins une électrode (12 ou 16) d'une pile à combustible (10) et une interconnexion adjacente (18), la couche de contact (22) comprenant au moins deux couches extérieures (100, 102) et une couche centrale (104) de matériaux électriquement conducteurs comprenant des particules de céramique électriquement conductrices, caractérisé en ce la couche centrale comprend une couche de relaxation des contraintes (104), où les particules dans la couche de relaxation des contraintes (104) sont des particules grossières, et les particules dans les couches extérieures (100, 102) sont des particules fines.

2. Empilement de piles à combustible de la revendication 1, dans lequel le diamètre moyen des particules grossières est au moins deux fois plus grand que le diamètre moyen des particules fines.

3. Empilement de piles à combustible de la revendication 2, dans lequel les couches extérieures (100, 102) comprennent des particules ayant un diamètre moyen inférieur à environ 2 µm et la couche de relaxation des contraintes comprend des particules ayant un diamètre supérieur à 2 µm.

4. Empilement de piles à combustible de la revendication 2, dans lequel la couche de relaxation des contraintes (104) comprend des particules d'oxyde de lanthane-cobalt-nickel.

5. Empilement de piles à combustible de la revendication 5, dans lequel les couches extérieures (100, 102) comprennent des particules de cobaltite de lanthane.

6. Empilement de piles à combustible de la revendication 1, dans lequel les couches extérieures (100, 102) comprennent des particules de cobaltite de lanthane ou des particules fines d'oxyde de lanthane-cobalt-nickel et la couche de relaxation des contraintes (104) comprend des particules de manganite de lanthane-strontium, ou des particules d'oxyde de lanthane-cobalt-nickel.

7. Empilement de piles à combustible de la revendication 6, dans lequel une première couche extérieure (100) en contact avec l'électrode (12 ou 16) comprend des particules fines d'oxyde de lanthane-cobalt-nickel, une deuxième couche extérieure (102) en contact avec l'interconnexion (18) comprend des particules fines de cobaltite de lanthane, et la couche de relaxation des contraintes (104) comprend des particules grossières d'oxyde de lanthane-cobalt-nickel.

8. Empilement de piles à combustible de la revendication 1, dans lequel l'une quelconque des couches de la couche de contact (22) comprend une pérovskite ayant la formule ABO₃ où :
(a) A représente un métal de terres rares ou des lanthanides dopé(s) ou non dopé(s) ;
(b) B représente un métal de transition dopé ou non dopé ; et
(c) où la pérovskite est électriquement conductrice et présente un coefficient de dilatation thermique qui est à une valeur de 5 × 10⁻⁶ K⁻¹ près du coefficient de dilatation thermique de l'au moins une électrode de la pile à combustible ou de l'interconnexion adjacente.

9. Empilement de piles à combustible de la revendication 8, dans lequel A comprend un lanthane dopé ou non dopé.

10. Empilement de piles à combustible de la revendication 9, dans lequel B comprend du cobalt combiné avec du nickel comme suit : Co_{1-y}Ni_{y} où 0,3 ≤ y ≤ 0,7.

11. Empilement de piles à combustible de la revendication 10, dans lequel le matériau pérovskite comprend un composé répondant à la formule La₁₋ₓEₓCo_{0,6}Ni_{0,4}O₃, où E représente un métal alcalino-terreux et x est supérieur ou égal à zéro.

12. Empilement de piles à combustible de la revendication 8, 9, 10, ou 11, dans lequel au moins un dopant est un adjuvant de frittage.

13. Empilement de piles à combustible de la revendication 8, dans lequel l'électrode (12 ou 16) comprend un métal noble et de la zircone stabilisée à l'oxyde d'yttrium.

14. Empilement de piles à combustible de la revendication 13, dans lequel le métal noble comprend du palladium.
